# EUROPEAN PATENT APPLICATION

(11) **EP 2 827 257 A1**
(43) Date of publication of application: **21.01.2015**
(21) Application number: 13176555.4
(22) Date of filing: 15.07.2013
(51) Int. Cl.: G06F 17/27, G06F 3/023

(54) **Methods and devices for providing a text prediction**

(71) Applicant: BlackBerry Limited, Waterloo, ON N2K 0A7 (CA)
(72) Inventor: Cheung, William Alexander, Waterloo, Ontario, N2L3W8 (CA); Beard, Gerald, Waterloo, Ontario, N2L3W8 (CA); Seaman, Conrad Delbert, Waterloo, Ontario, N2L3W8 (CA); Hocking, Andrew Douglas, Waterloo, Ontario, N2L3W8 (CA); Wormald, Christoph, Waterloo, Ontario, N2L3W8 (CA)
(74) Representative: Moore, Barry

(57) **Abstract**

A method for use in an electronic device including a display and a keyboard, the method including: receiving input reflecting selection of one or more characters through the keyboard; generating a predicted string of one or more characters based on the received input; determining a confidence value for the predicted string, based on a determination that the received input associated with a first one of the one or more selected characters reflects more than a single tap on a key of the keyboard; and displaying the predicted string on the display based on the determined confidence value.

## Description

### FIELD

This application generally relates to methods and devices for providing a text prediction.

### BACKGROUND

Advances in technology permit electronic devices, such as computers, netbooks, cellular phones, smart phones, personal digital assistants, tablets, etc., to process text input increasingly quickly on increasingly smaller devices and keyboards and keyboard layouts. Examples include word prediction functions to suggest or recommend during an input process and, in some instances before the process is completed, words that users intend to input. These functions increase both data entry speed and accuracy. Many users now depend on these features. Nevertheless, further optimization of textual entry is desirable. For example, existing word prediction functions do not account for intent of the user when the user takes a specific action to enter a word.

### BRIEF DESCRIPTION OF THE DRAWINGS

**Fig. 1** is a block diagram of an electronic device, according to an example embodiment.

**Fig. 2** shows a front view of a keyboard, according to an example embodiment.

**Fig. 3** is a flowchart illustrating a method for an electronic device to provide one or more text predictions, according to an example embodiment.

**Fig. 4** is a flowchart illustrating a method for an electronic device to provide one or more text predictions, according to an example embodiment.

### DETAILED DESCRIPTION

Reference will now be made in detail to the disclosed example embodiments, which are illustrated in the accompanying drawings. Wherever possible, the same reference numbers will be used throughout the drawings to refer to the same or like parts.

The present disclosure relates to an electronic device, such as a wired communication device, e.g., a laptop computer, or a wireless communication device such as a cellular phone, smartphone, wireless organizer, personal digital assistant, wirelessly enabled notebook computer, tablet, or a similar device. The electronic device may also be an electronic device without wireless communication capabilities, such as a handheld electronic game device, digital photograph album, digital camera, or other device.

Predictive text input solutions have been provided to assist with input on electronic devices during word entry or editing operations. These solutions include predicting which word a user is entering or intends to enter using a keyboard, for example, and offering a suggestion for completing the word based on a specific action that the user takes to input the word. In some embodiments, the electronic device provides a word prediction based on a determination that a received input associated with an input character reflects more than a single tap on a key of a keyboard of the device, such as when the user capitalizes the character or uses a secondary keyboard layout to input the character. In some embodiments, the electronic device provides a word prediction based on a detection that the user explicitly edits in the middle of a word. In addition, some predictive text input solutions work in coordination with auto-correction functions that, for example, correct misspellings or mistyped words during the word entry or editing operations.

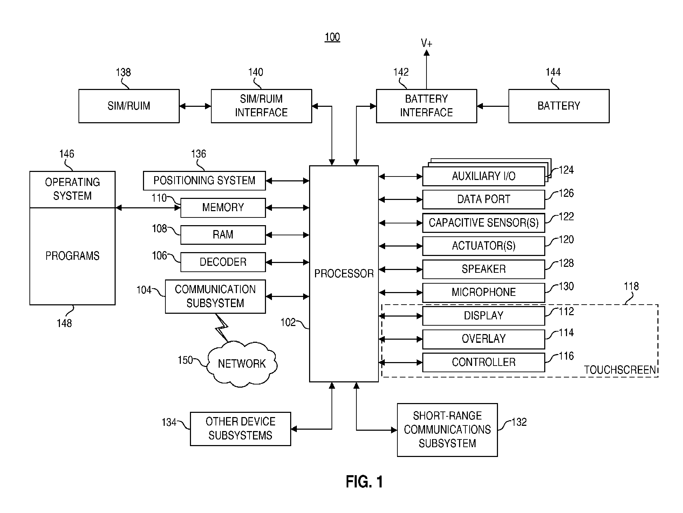

**Fig. 1** is a block diagram of an electronic device 100, according to an example embodiment. Electronic device 100 includes multiple components, such as a processor 102 that controls the overall operation of electronic device 100. Communication functions, including data and voice communications, are performed through an optional communication subsystem 104. Data received by electronic device 100 is decompressed and decrypted by a decoder 106. Communication subsystem 104 receives messages from and sends messages to a network 150. Network 150 may be any type of network, including, but not limited to, a wired network, a data wireless network, a voice wireless network, or a dual-mode wireless network that supports both voice and data communications. In some embodiments. electronic device 100 may be a battery-powered device, in which case it includes a battery interface 142 for receiving one or more batteries 144.

Processor 102 is coupled to and can interact with additional subsystems such as a Random Access Memory (RAM) 108; a memory 110, such as a hard drive, CD, DVD, flash memory, or a similar storage device; one or more actuators 120; one or more capacitive sensors 122; an auxiliary input/output (I/O) subsystem 124; a data port 126; a speaker 128; a microphone 130; a short-range communications subsystem 132; other device subsystems 134; and a touchscreen 118.

Touchscreen 118 may include a display 112 with a touch-active overlay 114 (or other similar touch input interface) connected to a controller 116. User-interaction with a graphical user interface (GUI), such as a virtual keyboard rendered on display 112 as a GUI for input of characters, or a web browser, is performed through touch-active overlay 114. Processor 102 interacts with touch-active overlay 114 via controller 116. Characters, such as text, symbols, images, and other items are displayed on display 112 of touchscreen 118 via processor 102. Characters are input into electronic device 100 using a keyboard (not shown in **Fig. 1**), such as a physical keyboard having keys that are mechanically actuated, or a virtual keyboard having keys displayed on display 112.

Touchscreen 118 is connected to and controlled by processor 102. Accordingly, detection of a touch event and determining the location of the touch event is performed by processor 102 of electronic device 100. A touch event includes, for example, a tap by a finger, a swipe by a finger, a swipe by a stylus, a long press by finger or stylus, or a press by a finger for a predetermined period of time, and the like.

While specific embodiments of a touchscreen are described, any suitable type of touchscreen for an electronic device can be used, including, but not limited to, a capacitive touchscreen, a resistive touchscreen, a surface acoustic wave (SAW) touchscreen, an embedded photo cell touchscreen, an infrared (IR) touchscreen, a strain gauge-based touchscreen, an optical imaging touchscreen, a dispersive signal technology touchscreen, an acoustic pulse recognition touchscreen or a frustrated total internal reflection touchscreen. The type of touchscreen technology used in any given embodiment will depend on the electronic device and its particular application and demands.

Processor 102 also, in some embodiments, interacts with a positioning system 136 for determining a location of electronic device 100. The location may be determined in any number of ways, such as by a computer, by a Global Positioning System (GPS), either included or not included in electric device 100, through a Wi-Fi network, or by having a location entered manually. The location may also be determined based on calendar entries.

In some embodiments, to identify a subscriber for network access, electronic device 100 uses a Subscriber Identity Module or a Removable User Identity Module (SIM/RUIM) card 138 inserted into a SIM/RUIM interface 140 for communication with a network, such as network 150. Alternatively, user identification information may be programmed into memory 110.

Electronic device 100 also includes an operating system 146 and programs 148 that are executed by processor 102 and are typically stored in memory 110. Additional applications may be loaded onto electronic device 100 through network 150, auxiliary I/O subsystem 124, data port 126, short-range communications subsystem 132, or any other suitable subsystem.

A received signal such as a text message, an e-mail message, an instant message, or a web page download is processed by communication subsystem 104 and this processed information is then provided to processor 102. Processor 102 processes the received signal for output to display 112, to auxiliary I/O subsystem 124, or a combination of both. A user can compose data items, for example, e-mail messages, which may be transmitted over network 150 through communication subsystem 104. For voice communications, the overall operation of electronic device 100 is similar. Speaker 128 outputs audible information converted from electrical signals, and microphone 130 converts audible information into electrical signals for processing.

In addition, electronic device 100 predicts received text input and provides one or more strings of characters as text predictions, such as words or phrases, acronyms, names, slang, colloquialisms, abbreviations, or any combination thereof, based on the input.

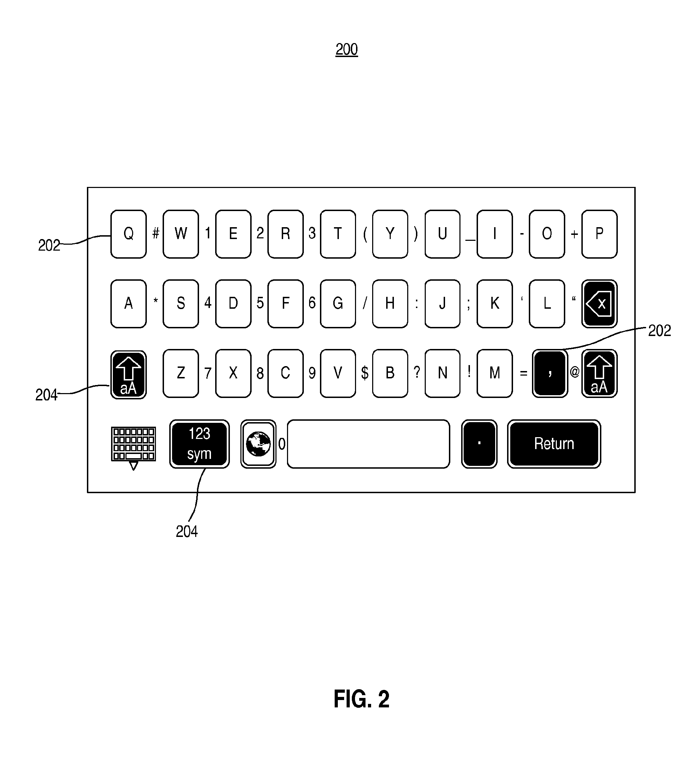

**Fig. 2** shows a front view of a keyboard 200 of electronic device 100 **(****Fig. 1**), according to an example embodiment. Referring to **Fig. 2**, keyboard 200 includes a set of rows, and each row further including a plurality of keys, each key associated with one or more characters. The input resolution of keyboard 200 is at least to the level of a single key; in other words, responsive to an input received via keyboard 200, processor 102 **(****Fig. 1**) is capable of detecting which one of the keys of keyboard 200 is contacted. Further, keyboard 200 includes various keys that may provide different inputs, such as character keys 202 that may provide inputs of letters, numbers, punctuation marks, and function keys 204 that may provide inputs of functions, e.g., a Shift key, a Return key, etc. In the illustrated embodiment, keyboard 200 has a standard QWERTY keyboard layout. However, any keyboard layout may be used by electronic device 100, such as AZERTY, QWERTZ, or a layout based on the International Telecommunication Union (ITU) standard (ITU E.161) having "ABC" on key 2, "DEF" on key 3, and so on.

In example embodiments, keyboard 200 includes a first keyboard layout and a second keyboard. For example, the first keyboard layout is configured to input a first plurality of characters, such as lower case letters, and the second keyboard layout is configured to input a first plurality of characters, such as capitalized letters or punctuation marks. As used herein, a character may be any alphanumeric character, such as a letter, a number, a symbol, a punctuation mark, and the like. To input a character from the second keyboard layout, a function key, such as a shift key, is generally selected at the same time as, or before, a key associated with that character is selected. When the function key is selected, the keyboard switches from the first keyboard layout to the second keyboard layout.

Keyboard 200 may be the physical keyboard of electronic device 100. Physical keyboard 200 includes a series of key covers overlaid on top of physical or electronic dome switches, and also includes actuators 120 (**Fig. 1**) and capacitive sensors 122 **(****Fig. 1**) that permit both tactile input via depression of the key covers on top of actuators 120 and gesture input via capacitive sensors 122. In addition, an input field may be displayed on display 112 that displays inputted characters.

Keyboard 200 may be the virtual keyboard of electronic device 100 rendered on touchscreen 118. A position of virtue keyboard 200 is variable such that virtual keyboard 200 may be placed at any location on touchscreen 118. Touchscreen 118 may include first and second areas, the first area being virtual keyboard 200 that receives input from a user and the second area being the input field that displays inputted characters.

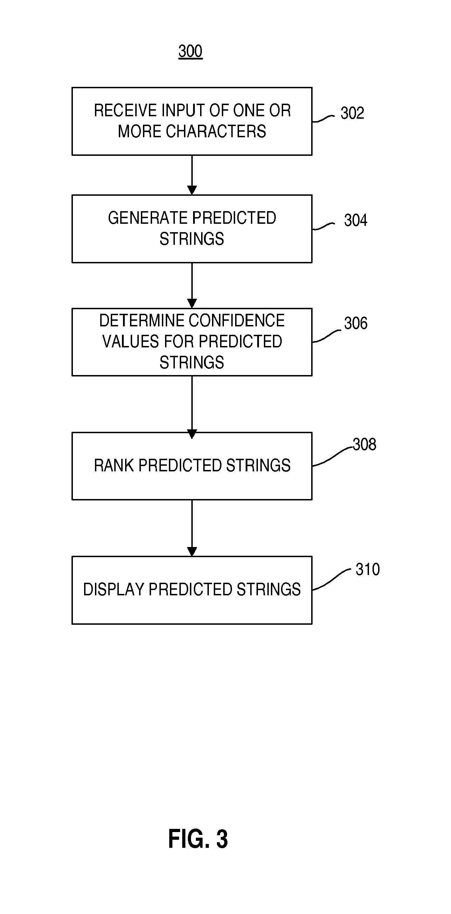

**Fig. 3** is a flowchart illustrating a method 300 for electronic device 100 (**Fig. 1**) to provide one or more text predictions, according to an example embodiment. Referring to **Fig. 3**, electronic device 100 receives an input of one or more characters through the physical or virtual keyboard, by receiving a selection of one or more keys of the keyboard (302). In other words, electronic device 100 receives input reflecting selection of one or more characters through the keyboard. The inputted characters are displayed in an input field on display 112. In some embodiments the input field is located adjacent to keyboard 302, for example, above, below or a combination of both above and below keyboard 302 on display 112.

Processor 102 of electronic device 100 generates one or more predicted strings of characters, such as words or phrases, acronyms, names, slang, colloquialisms, abbreviations, or any combination thereof, based on the received input (304). For example, processor 102 generates the predicted strings by executing one or more of programs 148 in memory 110. The predicted strings may include, for example, strings that are pre-stored in a dictionary in memory 110, strings that were previously inputted by the user, strings based on a hierarchy or tree structure, or any strings predicted based on a predefined arrangement.

In example embodiments, processor 102 uses contextual data for generating the predicted strings. Contextual data may include, for example, information about strings previously inputted by the user, grammatical attributes of the input (e.g., whether a noun or a verb is needed in a sentence), or any combination thereof. Using the contextual data, processor 102 may also determine whether a character in the received input is incorrect. For example, processor 102 may determine that an inputted character is supposed to be "w" instead of "a", given the proximity of these characters on the QWERTY keyboard.

In example embodiments, processor 102 generates a predicted string to which the received input is a substring. For example, if the characters "pl" are received as the input through the keyboard, processor 102 generates a predicted string "pl," and may additionally generate predicted strings "please," "plot," "place," etc. Similarly, if the characters "child" are received as the input through the keyboard, processor 102 generates a predicted string "child," and may additionally generate predicted strings "children" and "childish."

In example embodiments, processor 102 generates a predicted string to which the received input is not a substring. For example, if the characters "id" are received as the input through the keyboard, processor 102 generates a predicted string "I'd," even though "id" is not a substring of "I'd." Also for example, if the characters "reci" are received as the input through the keyboard, processor 102 generates a predicted string "receive" even though "reci" is not a substring of "receive."

In alternative embodiments, the predicted strings may be generated by another component in electronic device 100, instead of being generated by processor 102. In these embodiments, processor 102 may provide the inputted characters to a prediction processor (not shown), which generates the predicted strings based on the provided inputted characters and sends the predicted strings to processor 102. The prediction processor may be a software- or hardware-based module communicatively coupled to processor 102. The prediction processor may be either local or remote to electronic device 100, for example, located at a server in communication with device 100.

Still Referring to **Fig. 3**, electronic device 100 further determines confidence values for the predicted strings, respectively (306). A confidence value reflects the confidence with which the user inputs the inputted characters, and confident typing is generally correlated with a lower likelihood of mistake. Accordingly, in some embodiments, processor 102 ranks or adjusts rankings of the predicted strings based on their respective confidence values. For example, processor 102 may increase the ranking of a predicted string when the confidence value for the predicted string is high, and keep unchanged or lower the ranking of the predicted string when the confidence value for the predicted string is low. The ranking of the predicted string reflects a likelihood or probability that the user intends to input that predicted string, that is, the likelihood that the predicted string is an intended input.

In example embodiments, processor 102 determines the confidence value for a predicted string based on one or more confidence values determined for the one or more inputted characters, respectively. In one example embodiment, processor 102 determines the confidence value for the predicted string by calculating an average or median value of a predetermined number of recently inputted characters. In one example embodiment, processor 102 first determines a long-term confidence baseline by averaging confidence values over a large number of inputted characters, and then combines the baseline with short-term confidence information regarding recently inputted characters.

In some embodiments, processor 102 determines the confidence value for an inputted character based on strength applied to the key selected to input that character. For example, the keyboard measures the strength applied to the selected key, and passes the measured strength to processor 102 for determining the confidence value for the inputted character.

In some embodiments, electronic device 100 receives an inputted character from the virtue keyboard rendered on touch screen 118. Accordingly, processor 102 determines the confidence value for the inputted character based on an area of a touch on touchscreen 118 for selecting the key to input the character, since a confident touch is generally correlated with a relatively large touch area. The touch area may be calculated by touchscreen 118 and passed to processor 102 as a parameter, for example, along with the (X, Y) coordinates of a center of the touch area. Alternatively, touchscreen 118 passes to processor 102 parameters defining the approximated shape (square, circle, ellipse, etc.) formed by the touch, and processor 102 calculates a size of the shape, i.e., the touch area.

In some embodiments, touchscreen 118 passes to processor 102 raw data corresponding to the touch, i.e., unprocessed signal data registered by touchscreen 118 during the touch, and processor 102 processes the raw data to calculate the touch area and determine the confidence value. In some embodiments, processor 102 determines how close the center of the touch is to the center of the selected key when determining the confidence value.

In some embodiments, processor 102 determines the confidence value for a predicted string based on a determination whether any one of the inputted characters is inputted through more than a single tap on a key. In other words, processor 102 makes a determination whether the received input associated with any selected character reflects more than a single tap on a key of the keyboard. For example, a tap is a touch of one of the keys of the keyboard for a duration less than or equal to a predefined time period, such as 0.5 seconds. When the keyboard is a physical keyboard, a tap on a key does not engage the physical or electronic dome switch associated with that key.

In some embodiments, processor 102 determines that a first character of the inputted characters is inputted through more than a single tap, by determining that the first character is inputted through a press of a key on the keyboard longer than a predetermined time period, or through multiple presses of the same key. For example, a capital letter can be inputted though the long press of the key or multiple presses of the same key. In some embodiments, processor 102 determines that the first character is inputted through more than a single tap, by determining that a first key is touched to switch the keyboard from a first keyboard layout to a second keyboard layout, and that a second key is touched to input the first character on the second keyboard layout. For example, processor 102 may determine that a capitalized letter or a punctuation mark is inputted through more than a single tap, by determining that a function key, e.g., a Shift key, is selected, e.g., touched, to switch the keyboard from the first keyboard layout to the second keyboard layout, and that a character key is selected, e.g., touched, to input the capitalized letter or the punctuation mark on the second keyboard layout. The function key may be selected before, or at the same time as, the character key is selected.

Processor 102 further determines whether the predicted string includes the first character that is inputted through more than a single tap. If processor 102 determines that the predicted string includes the first character, processor 102 determines a relatively high confidence value for the predicted string, because inputting the first character through more than a single tap increases the probability that the first character is an intended input character. For example, processor 102 assigns a confidence value for the predicted string, the assigned confidence value being higher than a confidence value determined for any other predicted string that does not include the first character. If processor 102 determines that the predicted string does not include any character that is inputted through more than a single tap, processor 102 determines a relatively low confidence value for the predicted string.

For example, the keyboard of electronic device 100 receives from a user a selection of the Shift key and a selection the "R" key, sequentially or at the same time, and a further selection of the "O" key. Accordingly, processor 102 generates, e.g., a first predicted string "Rose" and a second predicted string "rose." In addition, processor 102 determines that the predicted string "Rose" includes a capitalized letter "R" that is inputted through the selection of the Shift key and the selection of the "R" key, which is more than a single tap, processor 102 determines a relatively high confidence value for the predicted string "Rose." In addition, processor 102 determines that the predicted string "rose" does not include any character that is inputted through more than a single tap on a key, processor 102 determines a relatively low confidence value for the predicted string "rose."

In another example, processor 102 determines an initial confidence value for the predicted string based on strength or force applied on each selected key or a touch area corresponding to the selected key. Processor 102 further increases the confidence value for the predicted string, if it is determined that the predicted string includes the first character inputted through more than a single tap. Processor 102 further increases the initial confidence value for the predicted string by multiplying the initial confidence value by a factor greater than one. Additionally, processor 102 increases the initial confidence value for the predicted string to be higher than the confidence value for another predicted string that does not include the first character.

Still referring to **Fig. 3**, in some embodiments, processor 102 ranks the predicted strings based on their respective determined confidence values (308). The ranking of a predicted string relates to the confidence value for the predicted string. For example, the ranking of the predicted string increases when the confidence value increases, and the ranking of the predicted decreases when the confidence value decreases. In some embodiments, processor 102 ranks the predicted strings based on additional ranking factors, such as contextual data, N-gram data, geolocation data, a typing speed, etc. And in some embodiments, processor 102 uses a ranking function to combine all of the ranking factors to rank the predicted strings, where each factor may be differently weighed.

In the above illustrated example, "rose" may be ranked higher than "Rose" when the ranking is based only on factors such as the contextual data, the N-gram data, the geolocation data, and the typing speed. However, when processor 102 determines a high confidence value for the predicted string "Rose," based on a determination that the predicted string "Rose" includes the character "R" that is inputted through more than a single tap, the high confidence value may increase the ranking of the predicted string "Rose," and render "Rose" as the highest-ranked predicted string.

After ranking the predicted strings, processor 102 displays one or more of the ranked strings on display 112 (310). The displayed strings may be displayed at or near the input field, or at any other suitable display location. In example embodiments, processor 102 limits a number of ranked strings to display. For example, processor 102 may choose to display only a predetermined number of the highest-ranked predicted strings.

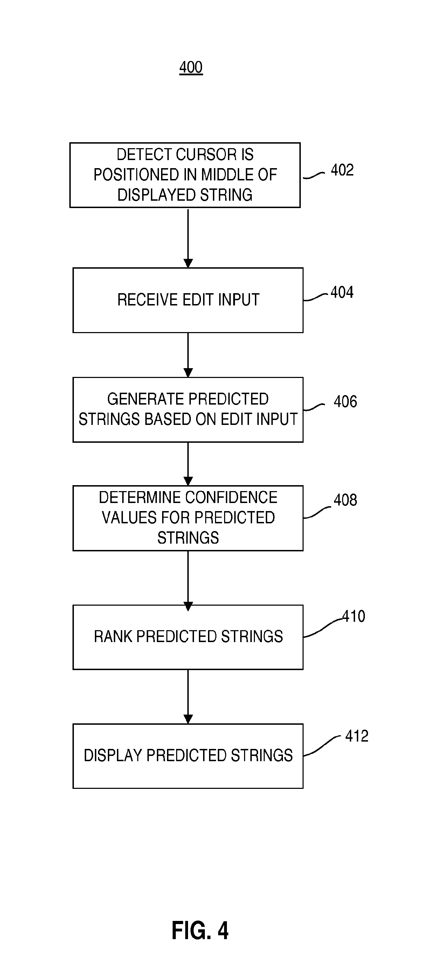

**Fig. 4** is a flowchart illustrating a method 400 for electronic device 100 **(****Fig. 1**) to provide one or more text predictions, according to an example embodiment. In the illustrated embodiment, it is assumed that the user has inputted a string of characters, which is displayed on display 112 of electronic device 100. For example, the user may input the string by inputting each of the characters of the string. Also for example, the user may input ones of the characters of the string and then select the string from a list of predicted strings generated by electronic device 100. It is further assumed that the user subsequently decides to make a correction on the displayed string and positions a cursor in the middle of the displayed string.

Referring to **Fig. 4**, processor 102 of electronic device 100 detects the cursor being positioned in the middle of the displayed string (402). Processor 102 further receives an edit input through the keyboard (404). For example, processor 102 may receive a deleting input to delete one or more characters preceding the cursor in the displayed string. Also for example, processor 102 may receive an inserting input to add one or more characters preceding the cursor. Accordingly, processor 102 generates one or more predicted strings based on the edit input (406).

For each of the predicted strings, a first number of characters in the predicted string correspond to the characters preceding the cursor in the displayed string, and a second number of characters of the predicted string correspond to the characters following the cursor in the displayed string. In some embodiments, the second number of characters in a predicted string is the same as the number of characters following the cursor in the displayed string. In some embodiments, the second number of characters in a predicted string differs from the number of characters following the cursor in the displayed string. Processor 102 may generate the predicted strings by executing one or more of programs 148 in memory 110, and the predicted strings may include strings that are pre-stored in a dictionary in memory 110, strings that were previously inputted by the user, strings based on a hierarchy or tree structure, or any strings predicted based on a predefined arrangement.

Processor 102 also determines confidence values for the predicted strings, respectively (408). For example, for each of the predicted strings, processor 102 determines a first confidence value for the first number of characters that correspond to the characters preceding the cursor in the displayed string, and determines a second confidence value for the second number of characters that correspond to the characters following the cursor in the displayed string. Processor 102 further determines a confidence value for the predicted string based on the determined first confidence value and the determined second confidence value.

In example embodiments, processor 102 determines the first confidence value for the first number of characters in the predicted string based on the edit input. In some embodiments, processor 102 determines the first confidence value based on strength applied to one or more keys selected to input the edit. In some embodiments, processor 102 determines the first confidence value based on an area of a touch on each key selected to input the edit. In some embodiments, processor 102 determines the first confidence value based on a determination whether or not any edited character is inputted through more than a single tap on a key, as described above.

In example embodiments, processor 102 determines whether the second number of characters in the predicted string matches the number of characters following the cursor in the displayed string. For example, if the second number of characters in the predicted string is the same as the number of characters following the cursor in the displayed string, processor 102 determines that they match. Accordingly, processor 102 determines the second confidence value for the second number of characters in the predicted string by determining a probability that the characters following the cursor in the displayed string form a word. For example, if the characters following the cursor in the displayed string are a word, processor 102 determines that the probability is 100%. Also for example, if the characters following the cursor are a suffix that is used in a relatively small number of words, processor 102 determines that the probability is a relatively small value, such as 50%.

If processor 102 determines that the probability that the characters following the cursor in the displayed string form a word is relatively high, processor 102 determines a relatively high confidence value as the second confidence value for the second number of characters in the predicted string, because a relatively probability that the characters following the cursor form a word increases the probability that those characters are intended input characters. For example, the characters following the cursor may be a second word in a compound word which the user intends to enter. Accordingly, processor 102 determines a relatively high confidence value for the characters following the cursor. In some embodiments, processor 102 may assign an initial confidence value for the second number of characters in the predicted string, and then multiply the initial confidence value by a predetermined factor greater than one. In some embodiments, processor 102 may increase the initial confidence value for the second number of characters in the predicted string, and decrease the confidence value for the first number of characters in the predicted string.

Still referring to **Fig. 4**, processor 102 ranks the predicted strings (410), and displays one or more of the ranked strings on display 112 of electronic device 100 (412). The ranked strings may be displayed at or near the input field, or at any other suitable display location. In some embodiments, processor 102 also limits a number of ranked strings to display. For example, processor 102 may choose to display only a predetermined number of the highest-ranked strings. In addition, processor 102 may perform an automatic correction by replacing the inputted string with the highest-ranked predicted string.

Embodiments and all of the functional operations described in this specification may be implemented in digital electronic circuitry, or in computer software, firmware, or hardware, including the structures disclosed in this specification and their structural equivalents, or in combinations of them. Embodiments may be implemented as one or more computer program products, i.e., one or more modules of computer program instructions encoded on a computer readable medium, e.g., a machine readable storage device, a machine readable storage medium, a memory device, or a machine readable propagated signal, for execution by, or to control the operation of, data processing apparatus.

The processes and logic flows described in this specification (e.g., **Figs. 3** and **4**) may be performed by one or more programmable processors executing one or more computer programs to perform functions by operating on input data and generating output. The processes and logic flows may also be performed by, and apparatuses can also be implemented as, special purpose logic circuitry, e.g., a field programmable gate array (FPGA) or an application specific integrated circuit (ASIC).

Certain features which, for clarity, are described in this specification in the context of separate embodiments, may also be provided in combination in a single embodiment. Conversely, various features which, for brevity, are described in the context of a single embodiment may also be provided in multiple embodiments separately or in any suitable sub-combination. Moreover, although features may be described above as acting in certain combinations and even initially claimed as such, one or more features from a claimed combination can in some cases be excised from the combination, and the claimed combination may be directed to a subcombination or variation of a subcombination. Additionally, particular embodiments have been described. Other embodiments are within the scope of the following claims.

Furthermore, one or more aspects of the following numbered clauses may describe and relate to further aspects or features within the context of the present teaching.
1. A method for use in an electronic device including a display and a keyboard, the method comprising:
   receiving input reflecting selection of one or more characters through the keyboard;
   generating a predicted string of one or more characters based on the received input;
   determining a confidence value for the predicted string, based on a determination that the received input associated with a first one of the one or more selected characters reflects more than a single tap on a key of the keyboard; and
   displaying the predicted string on the display based on the determined confidence value.
2. The method of clause 1, further comprising:
   determining that the received input associated with the first one of the one or more selected characters includes at least one of a press on the key of the keyboard longer than a predetermined time period or multiple presses on the key.
3. The method of clause 1, further comprising:
   determining that the received input associated with the first one of the one or more selected characters includes a first key selection to switch the keyboard from a first keyboard layout to a second keyboard layout, and a second key selection to input the first one of the one or more selected characters on the second keyboard layout.
4. The method of clause 1, wherein displaying the predicted string on the display comprises:
   determining a display ranking for the predicted string based on the determined confidence value; and
   displaying the predicted string based on the determined display ranking.
5. The method of clause 4, wherein determining the confidence value comprises:
   determining that the predicted string includes the first one of the one or more selected characters; and
   determining a relatively high confidence value for the predicted string relative to another predicted string that does not include the first one of the one or more selected characters.
6. The method of clause 5, wherein determining the relatively high confidence value comprises:
   assigning an initial confidence value for the predicted string; and
   increasing the initial confidence value to the relatively high confidence value.
7. The method of clause 5, wherein determining the relatively high confidence value comprises:
   assigning a confidence value for the predicted string, the assigned confidence value being higher than a confidence value determined for any other predicted string that does not include the first one of the one or more selected characters.
8. An electronic device, comprising:
   a processor;
   a display coupled to the processor; and
   a keyboard,
   wherein the processor is configured to:
      receive input reflecting selection of one or more characters through the keyboard;
      generate a predicted string of one or more characters based on the received input;
      determine a confidence value for the predicted string, based on a determination that the received input associated with a first one of the one or more selected characters reflects more than a single tap on a key of the keyboard; and
      display the predicted string on the display based on the determined confidence value.
9. The electronic device of clause 8, wherein the processor is further configured to determine that the received input associated with the first one of the one or more selected characters includes at least one of a press on the key of the keyboard longer than a predetermined time period or multiple presses on the key.
10. The electronic device of clause 8, wherein the processor is further configured to:
   determine that the received input associated with the first one of the one or more selected characters includes a first key selection to switch the keyboard from a first keyboard layout to a second keyboard layout; and a second key selection to input the first one of the one or more selected characters on the second keyboard layout.
11. A method for use in an electronic device including a display and a keyboard, the method comprising:
   detecting that a cursor is positioned in the middle of a string of characters displayed on the display;
   receiving through the keyboard an edit input preceding the cursor;
   generating a predicted string of characters based on the edit input, the predicted string including a first number of characters corresponding to the characters preceding the cursor in the displayed string, and a second number of characters corresponding to the characters following the cursor in the displayed string;
   determining a confidence value for the second number of characters in the predicted string; and
   displaying the predicted string on the display based on the determined confidence value.
12. The method of clause 11, wherein receiving the edit input comprises at least one of:
   receiving a deleting input deleting one or more of the characters preceding the cursor in the displayed string; or
   receiving an inserting input inserting one or more characters preceding the cursor.
13. The method of clause 11, wherein determining the confidence value comprises:
   determining a probability that the characters following the cursor in the displayed string form a word; and
   determining the confidence value based on the determined probability.
14. The method of clause 13, further comprising:
   determining if the second number of characters in the predicted string match the characters following the cursor in the displayed string.
15. The method of clause 11, further comprising:
   determining a first confidence value for the first number of characters in the predicted string;
   determining, as a second confidence value, the confidence value for the second number of characters in the predicted string;
   determining a display ranking for the predicted string based on the determined first confidence value and the determined second confidence value; and
   displaying the predicted string on the display based on the determined display ranking.
16. An electronic device, comprising:
   a processor;
   a display coupled to the processor; and
   a keyboard,
   wherein the processor is configured to:
      detect that a cursor is positioned in the middle of a string of characters displayed on the display;
      receive through the keyboard an edit input preceding the cursor;
      generate a predicted string of characters based on the edit input, the predicted string including a first number of characters corresponding to the characters preceding the cursor in the displayed string, and a second number of characters corresponding to the characters following the cursor in the displayed string;
      determine a confidence value for the second number of characters in the predicted string; and
      display the predicted string on the display based on the determined confidence value.
17. The electronic device of clause 16, wherein the processor is further configured to receive at least one of:
   a deleting input deleting one or more of the characters preceding the cursor in the displayed string; or
   an inserting input inserting one or more characters preceding the cursor.
18. The electronic device of clause 16, wherein the processor is further configured to:
   determine a probability that the characters following the cursor in the first string form a word.
19. The electronic device of clause 18, wherein the processor is further configured to:
   determine a probability that the characters following the cursor in the displayed string form a word; and
   determine the confidence value based on the determined probability.
20. The electronic device of clause 16, wherein the processor is further configured to:
   determine a first confidence value for the first number of characters in the predicted string;
   determine, as a second confidence value, the confidence value for the second number of characters in the predicted string;
   determine a display ranking for the predicted string based on the determined first confidence value and the determined second confidence value; and
   display the predicted string on the display based on the determined display ranking.

## Claims

1. A method for use in an electronic device including a display and a keyboard, the method comprising:
receiving input reflecting selection of one or more characters through the keyboard;
generating a predicted string of one or more characters based on the received input;
determining a confidence value for the predicted string, based on a determination that the received input associated with a first one of the one or more selected characters reflects more than a single tap on a key of the keyboard; and
displaying the predicted string on the display based on the determined confidence value.

2. The method of claim 1, further comprising:
determining that the received input associated with the first one of the one or more selected characters includes at least one of a press on the key of the keyboard longer than a predetermined time period or multiple presses on the key.

3. The method of claim 1, further comprising:
determining that the received input associated with the first one of the one or more selected characters includes a first key selection to switch the keyboard from a first keyboard layout to a second keyboard layout, and a second key selection to input the first one of the one or more selected characters on the second keyboard layout.

4. The method of claim 1, wherein displaying the predicted string on the display comprises:
determining a display ranking for the predicted string based on the determined confidence value; and
displaying the predicted string based on the determined display ranking and optionally:
determining that the predicted string includes the first one of the one or more selected characters; and
determining a relatively high confidence value for the predicted string relative to another predicted string that does not include the first one of the one or more selected characters.

5. The method of claim 4, wherein determining the relatively high confidence value comprises:
assigning an initial confidence value for the predicted string; and
increasing the initial confidence value to the relatively high confidence value or
assigning a confidence value for the predicted string, the assigned confidence value being higher than a confidence value determined for any other predicted string that does not include the first one of the one or more selected characters.

6. An electronic device, comprising:
a processor;
a display coupled to the processor; and
a keyboard,
wherein the processor is configured to:
receive input reflecting selection of one or more characters through the keyboard;
generate a predicted string of one or more characters based on the received input;
determine a confidence value for the predicted string, based on a determination that the received input associated with a first one of the one or more selected characters reflects more than a single tap on a key of the keyboard; and
display the predicted string on the display based on the determined confidence value.

7. The electronic device of claim 6, wherein the processor is further configured to:
determine that the received input associated with the first one of the one or more selected characters includes at least one of a press on the key of the keyboard longer than a predetermined time period or multiple presses on the key and optionally
determine that the received input associated with the first one of the one or more selected characters includes a first key selection to switch the keyboard from a first keyboard layout to a second keyboard layout; and a second key selection to input the first one of the one or more selected characters on the second keyboard layout.

8. A method for use in an electronic device including a display and a keyboard, the method comprising:
detecting that a cursor is positioned in the middle of a string of characters displayed on the display;
receiving through the keyboard an edit input preceding the cursor;
generating a predicted string of characters based on the edit input, the predicted string including a first number of characters corresponding to the characters preceding the cursor in the displayed string, and a second number of characters corresponding to the characters following the cursor in the displayed string;
determining a confidence value for the second number of characters in the predicted string; and
displaying the predicted string on the display based on the determined confidence value.

9. The method of claim 8, wherein receiving the edit input comprises at least one of:
receiving a deleting input deleting one or more of the characters preceding the cursor in the displayed string; or
receiving an inserting input inserting one or more characters preceding the cursor.

10. The method of claim 8, wherein determining the confidence value comprises:
determining a probability that the characters following the cursor in the displayed string form a word;
determining the confidence value based on the determined probability, and optionally
determining if the second number of characters in the predicted string match the characters following the cursor in the displayed string.

11. The method of claim 8, further comprising:
determining a first confidence value for the first number of characters in the predicted string;
determining, as a second confidence value, the confidence value for the second number of characters in the predicted string;
determining a display ranking for the predicted string based on the determined first confidence value and the determined second confidence value; and
displaying the predicted string on the display based on the determined display ranking.

12. An electronic device, comprising:
a processor;
a display coupled to the processor; and
a keyboard,
wherein the processor is configured to:
detect that a cursor is positioned in the middle of a string of characters displayed on the display;
receive through the keyboard an edit input preceding the cursor;
generate a predicted string of characters based on the edit input, the predicted string including a first number of characters corresponding to the characters preceding the cursor in the displayed string, and a second number of characters corresponding to the characters following the cursor in the displayed string;
determine a confidence value for the second number of characters in the predicted string; and
display the predicted string on the display based on the determined confidence value.

13. The electronic device of claim 12, wherein the processor is further configured to receive at least one of:
a deleting input deleting one or more of the characters preceding the cursor in the displayed string; or
an inserting input inserting one or more characters preceding the cursor.

14. The electronic device of claim 12, wherein the processor is further configured to:
determine a probability that the characters following the cursor in the first string form a word and optionally
determine a probability that the characters following the cursor in the displayed string form a word; and
determine the confidence value based on the determined probability.

15. The electronic device of claim 12, wherein the processor is further configured to:
determine a first confidence value for the first number of characters in the predicted string;
determine, as a second confidence value, the confidence value for the second number of characters in the predicted string;
determine a display ranking for the predicted string based on the determined first confidence value and the determined second confidence value; and
display the predicted string on the display based on the determined display ranking.
